# EUROPEAN PATENT APPLICATION

(11) **EP 1 504 688 A1**
(43) Date of publication of application: **09.02.2005**
(21) Application number: 03028812.0
(22) Date of filing: 15.12.2003
(51) Int. Cl.: A43B 13/04, A43B 17/14, A43B 13/12, B29D 31/518, A43D 8/32, A43D 8/46

(54) **Composite rubber plate**

(30) Priority: 05.08.2003 IT VR20030096
(71) Applicant: Prialpas S.P.A., 37060 Sona (Verona) (IT)
(72) Inventor: Parolini, Giuseppe, Dr., 37121 Verona (IT)
(74) Representative: Reniero, Cirillo Silvano

(57) **Abstract**

A composite rubber plate including at least one relatively hard rubber layer and a second layer, or portions thereof, of relatively soft rubber.

## Description

The present invention relates to a composite rubber plate, particularly suitable for obtaining soles for footwear.

It is well known that synthetic rubber plates have been manufactured for a long time by punching with the purpose of obtaining soles for footwear. However, rubber soles are not ideally suited to undergoing "pre-forming" operations to be imparted a modelled shape that is not flat at certain portions of the edging, for example close to the scalmo of the foot and/or with a slight "upcurl" at the sole's edge towards the upper, as is usually the case with leather soles. As a greater or lesser period of time elapses, owing to its resilient behaviour, the rubber returns to its initial shape, i.e. that of a flat plate. This is irrespective of whether or not it has been subjected to cold or hot press pre-forming, at high or low pressures, or of whether any "skiving" or thinning of the area to be preformed has been carried out.

Another limitation for rubber soles is that when used in the manufacture of sandals in association with an insole, the straps of leather or other material that make up the upper part of the sandal and which are inserted between the sole and insole distort the sole so that it takes on an undesired wavy form that is all the more pronounced when the sole is made of a resilient material such as rubber.

The main object of the present invention is to provide a composite rubber plate for obtaining soles for footwear suitable for overcoming the problems indicated above resulting from the use of conventional rubber soles.

Another object of the present invention is to provide a composite rubber plate for soles that is suitable for such treatments as pre-forming and skiving as performed on natural leather so that the range of possible uses for rubber soles, and thus for the plates from which they are made, is significantly increased.

According to one aspect of the present invention, there is provided a composite rubber plate, characterised in that it has at least one first layer of rubber from a relatively hard compound and a second layer, or portions thereof, that are relatively soft and made from a compound that is relatively more resilient.

Advantageously, said first and second layers, or portions thereof, are joined by curing their respective compounds.

According to another aspect of the present invention, there is provided a process for obtaining a rubber sole for footwear starting from a composite rubber plate, wherein said plate is subjected to a punching operation to obtain at least one sole for footwear and a pre-forming operation is carried out on the, or on each, sole, *characterised in that it comprises* an operation of at least partly removing said second layer, or portions thereof, from certain pre-determined areas of each sole, before the pre-forming operation is carried out.

Further aspects and advantages of the present invention will be more fully understood from the following description of some currently preferred embodiments thereof given merely by way of non-limiting examples, with reference to the accompanying drawings, in which:
Figure 1 is a perspective view, slightly from top with parts cut out, of a first embodiment of composite rubber plate according to the present invention;
Figure 2 shows a bottom view on an enlarged scale of the plate shown in Figure 1;
Figure 3 is a side view of the plate shown in Figure. 2;
Figure 4 shows a perspective view slightly from top of a sole for footwear obtained from a rubber plate - as illustrated in Figures 1 to 3 - after being subjected to the skiving and pre-forming operations;
Figure 5 illustrates a cross-section view along line V-V of Figure 4;
Figure 6 shows a cross-section view taken along line VI-VI of Figure 4;
Figure 7 is a bottom perspective view of the sole in Figure 4;
Figure 8 is a perspective view, slightly from above, with parts cut out, of another embodiment of composite plate for footwear according to the present invention;
Figure 9 shows a plan view of the-composite rubber plate shown in Figure 8;
Figure 10 is a right side view of the composite rubber plate shown in Figure 9;
Figure 11 is a perspective view, slightly from top, of a sole for footwear obtained from a composite rubber plate shown in Figures 9 and 10; and
Figure 12 shows a cross section view taken along line XII-XII in Figure 11.

Similar or identical parts in the various figures have been designated by the same reference numerals.

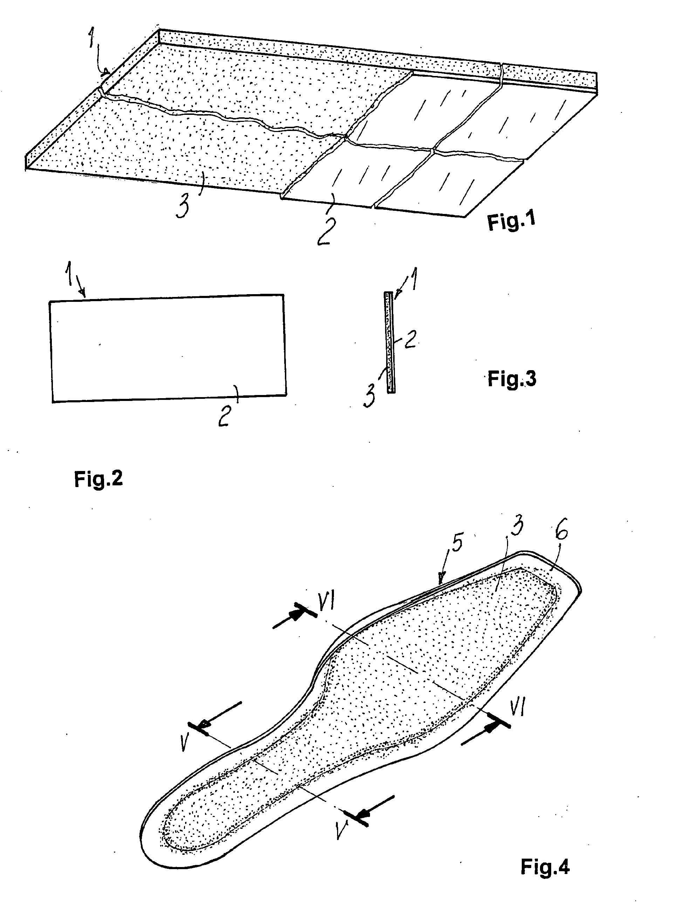

Firstly with reference to Figures 1 to 7, it will be noted that a composite rubber plate 1 according to a first embodiment of this invention comprises a first rubber layer obtained from a relatively hard rubber compound, and a second layer 3 of relatively soft rubber, i.e. obtained from a relatively resilient compound.

Layer 2 has preferably a Shore hardness substantially in the range from 65 to 95, whereas the soft layer 3 has a Shore hardness substantially in the range from 40 to 80.

The thickness selection for layers 2 and 3 depends on final use requirements. By way of example, the thickness of layer 2 can vary from 1.5 to 3 mm and that of layer 3 from 1.5 to 5 mm.

The chemical and physical bonding of layers 2 and 3 to each other is obtained by a step of curing and cross-linking the layers themselves so as to obtain a composite plate of two layers that are bonded to each other and that exhibit the physical properties of the two component layers combined together. These characteristics can be modified in a programmed and controlled manner to meet specific use-related requirements, either by varying the thickness of layers 2 and 3, or by suitably changing their hardness, or else by adjusting both such parameters.

It has been found very convenient to vary only the thickness of the two layers, given that the prevalence of the characteristics of the one or the other layer alters the overall hardness of the composite plate with resulting variations in comfort and in the risk of imparting permanent distortions to portions of the composite plate itself.

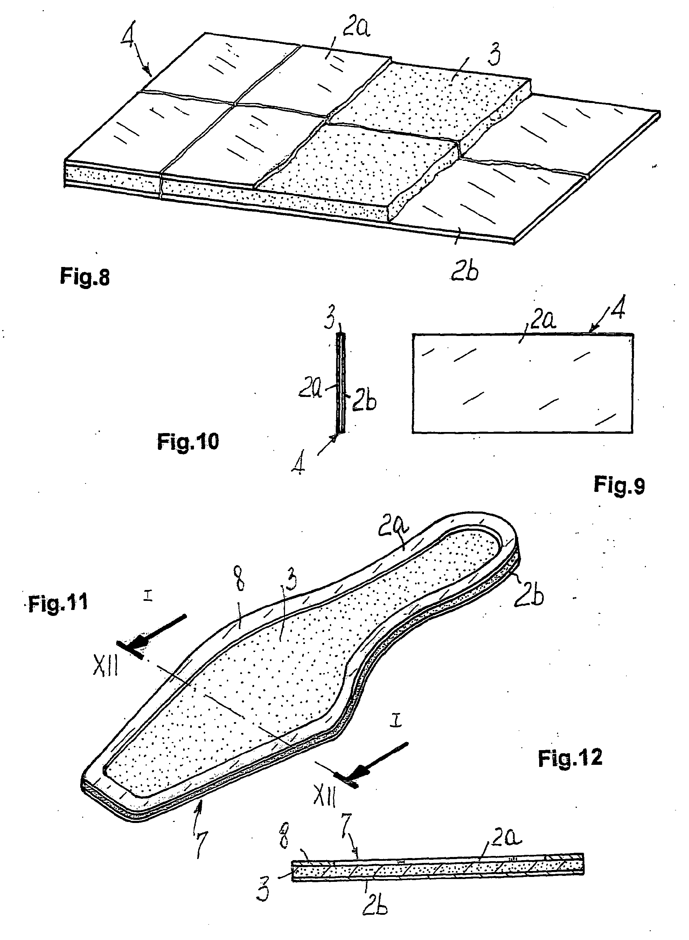

Figures 8 to 10 show a preferred embodiment of a method of obtaining a composite rubber plate according to the present invention. Two hard layers 2a and 2b with a Shore hardness of 94 are produced, each with a thickness of 2 mm, by mixing SBR (styrene-butadiene rubber) with mineral fillers and curing accelerators, as well known to a skilled person in the art. A soft layer 3 having a Shore hardness of 72 and a thickness of 3 mm is then made separately by mixing synthetic and natural rubber with mineral fillers and vulcanisation accelerators by means of a method that is well known in the rubber industry. A composite or sandwich is then prepared as in Figure 8, made up of two hard outer layers 2a and 2b and one soft inner layer 3 of a total thickness of 7 mm. The sandwich is then subjected to a curing process in a flat compression press to obtain a cured pane or plate 4.

Plate 4 is split into two plates 1 (figure 1) each having a thickness of 3.5 mm, i.e. having its own hard layer 2a or 2b of an overall thickness of 2 mm and one soft layer 3 of 1.5 mm.

One or more soles (Figures 4 to 7) can be obtained from one composite rubber plate 1 by a punching operation, as known in the art. A sole 5 can be subjected to a partial or total soft layer 3 removal operation, for example along a whole outer discontinuous band 6, for the purpose of neutralising the softening effect exerted on the soft layer 3 by the material, to reveal the hardness of the hard layer 2 in the area or areas from which the portions have been removed.

The removal can be performed with any suitable tool, for example by brushing or milling.

The hard and soft rubber layers, 2 and 3 respectively, are preferably differently coloured so that the operator can visually assess the depth to which the soft material has been removed.

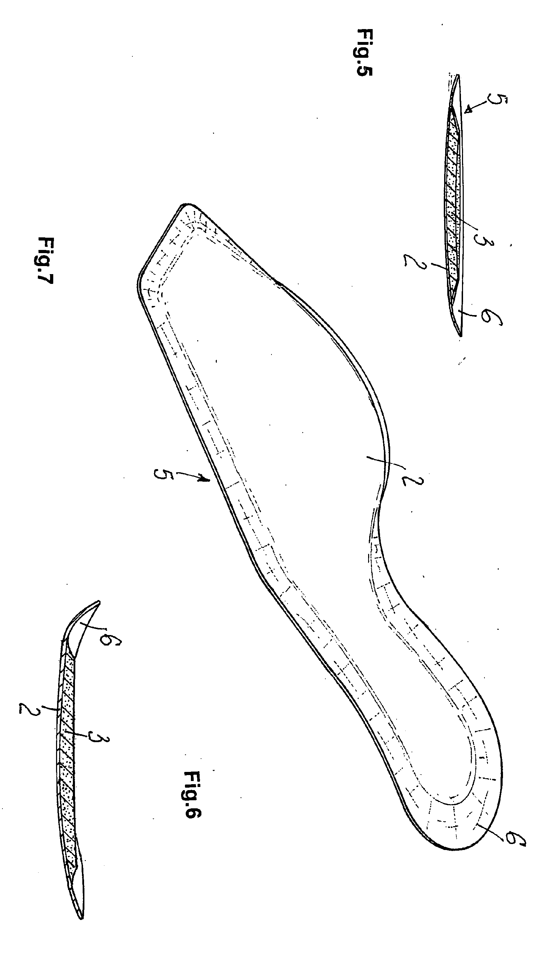

In the exposed areas or in parts thereof, a skiving or thinning operation can also be carried out on the hard layer 2, thereby decreasing its thickness, so as to facilitate, and/or render more stable and permanent the effects of, subsequent total or partial permanent peripheral pre-forming or bending of the soles by means of a deforming stamp, an operation that is itself well known in the natural leather sole industry and to date impossible to carry out on rubber soles, as shown in greater detail in figures 5 to 7.

With a three-layer panel or sandwich 4, as illustrated in Figure 4, one or more soles for footwear 7 can be obtained by punching. These are also subjected to a milling operation at their face (e.g. face 2a) opposite to face 2b designed to tread the ground in the finished show (footwear) so that a sole with a continuous peripheral welting 8 and a portion of insole consisting of a layer of relatively soft material 3 is obtained.

The invention thus conceived is susceptible to numerous modifications and variations all within the scope of the invention as defined by the claims.

Thus, for example, layer 3 can also be applied in the form of strips of areas.

Moreover, if a composite plate is obtained having a hard rubber layer and a soft rubber layer, from which one or more soles for each sandal are made, the straps or 'mignons' of the sandal will be applied only under the soft layer (in use turned towards the wearer's foot) which, owing to its softness, will be suitable for the insertion of straps or mignons without causing any problems or discomfort for the wearer. At the same time the hard rubber layer designed, in use, to tread the ground, will not result in being deformed and will thus also remain attractive to look at.

In addition, shock absorbing or damping soles can be obtained, particularly in the heel area of a footwear, i.e. formed with a sandwich plate with two outer layers of relatively hard rubber and a middle layer of relatively soft rubber according to the present invention.

## Claims

1. A method of obtaining a rubber sole for footwear from a composite rubber plate comprising at least one first rubber layer obtained from a relatively hard compound and one second relatively soft rubber layer, or portions thereof, obtained from a relatively soft layer, having particularly enhanced resiliency features, which method comprises subjecting said plate to a punching operation to obtain at least one sole for footwear, and ***characterised in that*** the rubber sole, or each rubber sole, is subjected to an operation of at least partly removing said second layer, or portions thereof, from predetermined areas of each sole.

2. A method according to claim 1, **characterised in that** it comprises at least one pre-forming operation after said removal operation.

3. A method according to claim 1, **characterised in that** said removal operation is carried out along the whole continuous peripheral edge of each sole.

4. A method according to claim 1, **characterised in that** said removal operation is carried out over the whole inner portion of a sole except for an incorporated continuous welt or rand.

5. A composite rubber plate **characterised in that** it comprises at least one rubber layer obtained from a relatively hard compound and at least one relatively soft layer, or portions thereof, obtained from a compound that is relatively highly resilient.

6. A composite rubber plate according to claim 5, **characterised in that** said hard rubber layer or layers and said soft rubber layer, or portions thereof, are bonded to each other by curing their respective compounds.

7. A composite plate according to claim 6, **characterised in that** said soft rubber layer is sandwiched between two hard rubber layers.

8. A sole for footwear when obtained from a composite plate according to any claim 5 to 7.

9. A sole for footwear according to claim 7, **characterised in that** it has a peripheral area without said soft rubber material.

10. A sole for footwear according to claim 7, **characterised in that** at least one portion of said peripheral area is preformed.

11. A sole according to claim 7, **characterised by** the fact that there is an inner area without said hard rubber material and edged by a continuous welt consisting of a portion of said hard rubber layer.

12. A sole for footwear according to claim 7, suitable for being used as a damping or shock absorbing sole.

13. A sole for sandal with straps or 'mignons' according to any claim 5 to 6, **characterised in that** it comprises one hard rubber layer designed to be, in use, the outer layer treading the ground, and a soft rubber layer facing towards the wearer's foot, the sandal's straps or mignons being inserted into and attached to said soft rubber layer.

14. A composite rubber sole for footwear including at least one relatively hard rubber layer of and one relatively soft rubber layer so that said sole can be subjected to at least one pre-forming operation and/or can function as a shock absorber by means of curing and cross-linking between layers.
